# EUROPÄISCHE PATENTSCHRIFT

(11) **EP 3 969 847 B1**
(45) Veröffentlichungstag und Bekanntmachung des Hinweises auf die Patenterteilung: **25.12.2024**
(21) Anmeldenummer: 20722574.9
(22) Anmeldetag: 29.04.2020
(51) Int. Cl.: G01C 21/36, G01C 21/32, H04W 4/38

(54) **VERFAHREN UND VORRICHTUNG ZUM VERARBEITEN VON SENSORDATEN**
METHOD AND APPARATUS FOR PROCESSING SENSOR DATA
PROCEDE ET DISPOSITIF POUR TRAITER DES DONNEES DE CAPTEURS

(30) Priorität: 17.05.2019 DE 102019207212
(43) Veröffentlichungstag der Anmeldung: 23.03.2022
(73) Patentinhaber: Robert Bosch GmbH, 70442 Stuttgart (DE)
(72) Erfinder: STRAUSS, Tobias, 74182 Obersulm (DE); ALAWIEH, Ali, 74199 Untergruppenbach (DE); ZHANG, Wei, 71229 Leonberg (DE); TSCHOLL, Philipp, 74232 Abstatt (DE)
(86) Internationale Anmeldenummer: PCT/EP2020/061877
(87) Internationale Veröffentlichungsnummer: WO 2020/233955

(56) Entgegenhaltungen:
- WO-A1-2018/126215
- WO-A1-2020/104355
- MASSOW K ET AL: "Deriving HD maps for highly automated driving from vehicular probe data", 2016 IEEE 19TH INTERNATIONAL CONFERENCE ON INTELLIGENT TRANSPORTATION SYSTEMS (ITSC), IEEE, 1 November 2016 (2016-11-01), pages 1745 - 1752, XP033028575, DOI: 10.1109/ITSC.2016.7795794

## Beschreibung

Die Erfindung betrifft ein Verfahren zum Verarbeiten von Sensordaten. Die Erfindung betrifft weiterhin eine Vorrichtung zum Verarbeiten von Sensordaten. Die Erfindung betrifft ferner eine Steuerungseinrichtung. Die Erfindung betrifft ferner ein Computerprogramm. Die Erfindung betrifft ferner ein maschinenlesbares Speichermedium.

### Stand der Technik

Die Offenlegungsschrift WO 2018/126215 A1 offenbart ein Verfahren zum Erstellen einer digitalen Straßenkarte.

Das Dokument "MASSOW K ET AL: "Deriving HD maps for highly automated driving from vehicular probe data", 2016 IEEE 19TH INTERNATIONAL CONFERENCE ON INTELLIGENT TRANSPORTATION SYSTEMS (ITSC), IEEE, 1. November 2016 (2016-11-01), Seiten 1745-1752, XP033028575, DOI: 10.1109/ITSC.2016.7795794" offenbart ein Konzept zum Erstellen von Straßenkarten unter Verwendung von Fahrzeugdaten.

An Technologien, die automatisiertes Fahren ermöglichen, werden in der Regel sehr hohe Erwartungshaltungen und Anforderungen gestellt. Eine dieser Anforderungen ist eine detaillierte, genaue, aktuelle und vollständige digitale Karte der Umgebung, die ausreichend genau ist, um eine robuste, genaue und sichere Lokalisierung, Planung und Navigation von AD (engl. automatic driving) oder ADAS-Fahrzeugen (engl. advance driver assistance system) in einer derartigen Umgebung sicherzustellen.

Herkömmlicherweise werden Daten derartiger "Umgebungskarten" durch dedizierte Kartierungsfahrzeuge erfasst, die mit hochgenauen und kostenintensiven Umfeldsensoren ausgestattet sind. Diese Fahrzeuge sind in der Lage, nahezu alle Merkmale der Umgebung zu erfassen. Um allerdings die vorgenannten Erfordernisse für eine vollständige, genaue und aktuelle Umgebungskarte der ganzen Welt bereitzustellen, ist ein derartiger Ansatz sehr kostenintensiv und praktisch nicht durchführbar.

Bekannt ist, dass heutzutage in Fahrzeugen zahlreiche kostengünstige Sensoren (z.B. GPS, Radar, Kamera, usw.) für die Verwendung in Fahrerassistenzsystemen verbaut sind.

In der Praxis ist allerdings die Bandbreite jedes Fahrzeugs zur Kartenerstellungsvorrichtung, die üblicherweise in der Cloud angeordnet ist, in der Regel sehr begrenzt (z.B. auf ca. 10 KB/km), was bedeutet, dass nur ein kleiner Umfang der Umfelddaten übertragen werden kann, definitiv nicht aber die Sensorrohdaten.

Daten aus Umfeldsensoren werden bereits heute genutzt, um spezifische Fahraufgaben eines Fahrzeugs zu übernehmen. Zum Beispiel werden Umfeldsensordaten genutzt, um Notbremsassistenten (AEB, engl. Autonomous Emergency Braking) oder Abstandsregeltempomaten (ACC, engl. Adaptive Cruise Control) zu steuern. Typischerweise werden die Umfeldsensordaten für die Realisierung von Funktionen wie AEB oder ACC von Radarsensoren und/oder Kameras ermittelt. Allen diesen Funktionen gemeinsam ist, dass ihr Wirkfeld stark eingeschränkt ist.

DE 10 2016 205 436 A1 offenbart ein Verfahren und ein System zum Erstellen einer digitalen Karte. Gelehrt wird, dass zum Erstellen der digitalen Karte lediglich Teilstücke der Fahrzeugumgebung berücksichtig werden, wobei bei einer Kommunikation zwischen Fahrzeug und Cloud nicht die gesamte Fahrzeugumgebung, sondern nur ein Teil derselben von den Fahrzeugsensoren erfasst wird.

S. Shobhit und N. Michael, "Approximate continuous belief distributions for precise autonomous inspection," in 2016 IEEE International Symposium on Safety, Security, and Rescue Robotics (SSRR), Lausanne, 2016 offenbart ein hierarchisches Umgebungsmodell, in welchem jeder Hierarchie-Grad eine Repräsentation der Welt mit einer bestimmten Abstraktionsstufe darstellt.
I. Ulrich und I. Nourbakhsh, "Appearance-based place recognition for topological localization," in Proceedings 2000 ICRA. Millennium Conference. IEEE International Conference on Robotics and Automation. Symposia Proceedings Cat.No.00CH37065), San Francisco, 2000 offenbart ein Verfahren einer topologischen Genauigkeit, bzw. einer Lokalisierung mit geringer Genauigkeit.

### Offenbarung der Erfindung

Eine Aufgabe der Erfindung ist es, ein verbessertes Verfahren zum Verarbeiten von Sensordaten bereit zu stellen.

Die Aufgabe wird gemäß einem ersten Aspekt gelöst mit einem Verfahren wie in Anspruch 1 definiert.

Vorteilhaft kann auf diese Weise eine Übertragung der Umfelddaten auch bei einer reduzierten Bandbreite von Übertragungskanälen zwischen der Sendeeinrichtung und der Steuerungseinrichtung bzw. zwischen der Steuerungseinrichtung und der Verarbeitungsvorrichtung durchgeführt werden. Vorteilhaft lassen sich auf diese Weise Rohdaten der Umfelddaten um einen Faktor in der Größenordnung von ca. 100 reduzieren. Vorteilhaft kann auf diese Weise eine ausschließlich zum Zwecke des Erstellens einer digitalen Karte verwendete Kartierungsflotte erheblich verkleinert werden, weil die Umfelddaten vorteilhaft mit normalen Serienfahrzeugen erfasst und übermittelt werden können.

Gemäß einem zweiten Aspekt wird die Aufgabe gelöst mit einer Vorrichtung wie in Anspruch 7 definiert.

Vorteilhafte Weiterbildungen des Verfahrens sind Gegenstand von abhängigen Ansprüchen.

Eine vorteilhafte Weiterbildung des Verfahrens sieht vor, dass mit dem Datenbegrenzungskriterium die Umfelddaten selektiert werden. Dadurch wird eine erste Datenbegrenzungsstrategie realisiert.

Eine weitere vorteilhafte Weiterbildung des Verfahrens sieht vor, dass zufällig ausgewählte Umfelddaten übermittelt werden. Auf diese Weise wird eine weitere Datenbegrenzungsstrategie realisiert.

Eine weitere vorteilhafte Weiterbildung des Verfahrens sieht vor, dass beim Ermitteln der Umfelddaten eine Priorisierung der Erfassungstätigkeit der Sensoreinrichtung in definierte Richtungen durchgeführt wird. Auf diese Weise wird eine weitere Datenbegrenzungsstrategie realisiert.

Weitere vorteilhafte Weiterbildungen des Verfahrens zeichnen sich dadurch aus, dass beim Bereitstellen der Umfelddaten ein örtlich und/oder zeitlich definiert dichtes Erfassen von Messpunkten durchgeführt wird. Auf diese Weise werden sogenannte Punktmessungen (engl. point cloud measuerement) durchgeführt, mit denen eine weitere Datenbegrenzungsstrategie realisiert wird. Auf diese Weise können Ausschnitte der Umgebung mit sehr hoher Auflösung oder mit eher grober bzw. geringer Auflösung erfasst werden, was sich in einer Datenmenge an Umfelddaten auswirkt.

Eine weitere vorteilhafte Weiterbildung des Verfahrens sieht vor, dass die Umfelddaten für die Erstellung einer digitalen Karte verwendet werden. Auf diese Weise wird ein vorteilhafter Anwendungsfall für das vorgeschlagene Verfahren realisiert.

Die Erfindung wird im Folgenden mit weiteren Merkmalen und Vorteilen anhand von mehreren Figuren detailliert beschrieben. Dabei ergeben sich technische Merkmale und Vorteile der beschriebenen Vorrichtung in analoger Weise aus technischen Merkmalen und Vorteilen des beschriebenen Verfahrens.

In den Figuren zeigt:
- Fig. 1: eine prinzipielle Darstellung einer vorgeschlagenen Vorrichtung zum Verarbeiten von Sensordaten; und
- Fig. 2: eine prinzipielle Darstellung eines Ablaufdiagramms eines vorgeschlagenen Verfahrens zum Verarbeiten von Sensordaten.

### Beschreibung von Ausführungsformen

Ein Kerngedanke der Erfindung ist es insbesondere, eine Übertragung von Sensordaten bei begrenzter Bandbreite im Fahrzeug vorzunehmen. Als beispielhafter Anwendungsfall wird vorgeschlagen, Daten zur Erstellung einer optimierten digitalen Karte bereitzustellen.

Vorteilhaft können mit den erfindungsgemäß bereitgestellten Umfelddaten sehr genaue und robuste digitale Karten, die möglichst vollständig und hochverfügbar sind, erstellt werden. Vorteilhaft ist das allgemeine Prinzip sehr einfach und ermöglicht viele, nachfolgend nur beispielhaft beschriebene Implementierungen und Anwendungsfälle.

Jeder Anwendungsfall erfordert eine oder mehrere Datenübertragungs-Strategien, die dafür spezifisch geeignet sind. Unter der Annahme des spezifischen Problems ist die Information, die zur Entscheidungsfindung verfügbar ist, der Grad an Freiheit betreffend verfügbarer und zu übermittelnder Umfelddaten sowie Gewichtungen, die jedem Optimierungsziel betreffend Umfelddaten zugeordnet werden (Genauigkeit, Vollständigkeit, usw.). Dabei können verschiedene Strategien durch Lösen von Optimierungsprobleme abgeleitet werden, welche aus jedem einzelnen Anwendungsfall resultieren.

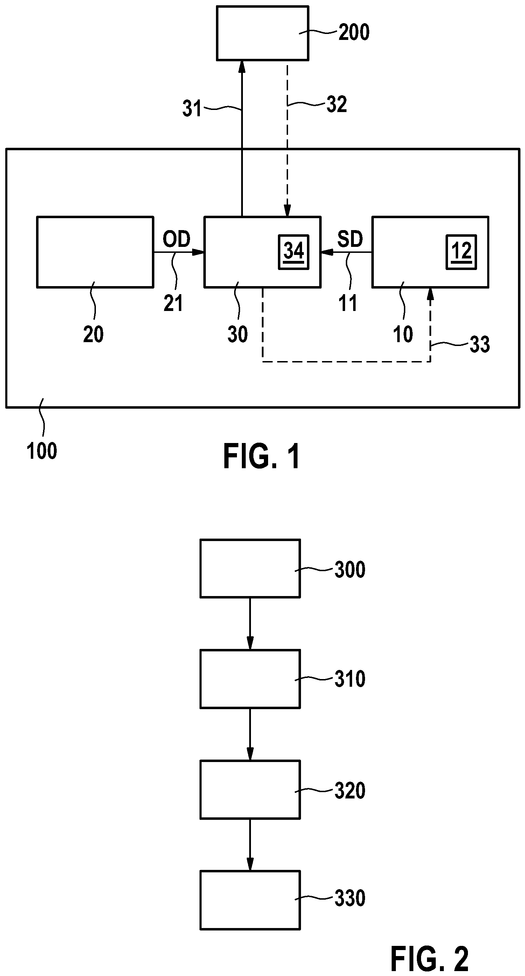

Abhängig vom Konnektivitäts-Status jedes Fahrzeugs, können mehrere Szenarien betrachtet werden, die anhand von Fig. 1 näher erläutert werden. Fig. 1 zeigt eine Ausführungsform einer vorgeschlagenen Vorrichtung 100 zum Verarbeiten von Sensordaten. Man erkennt eine Sensoreinrichtung 10 (z.B. Radarsensor, Lidarsensor, Kamera, usw.) eines Fahrzeugs (nicht dargestellt), die über eine erste Leitung 11 (z.B. CAN-Bus) funktional mit einer zentralen Steuerungseinrichtung 30 (z.B. elektronisches Steuergerät, ECU) verbunden ist, welche ihrerseits mittels einer zweiten Leitung 31 mit einer Verarbeitungsvorrichtung 200, die z.B. in der Cloud angeordnet ist, verbunden ist. Die zweite Leitung 31 ist hier nicht im physikalischen Sinne zu verstehen, sondern als ein Datenverbindungskanal (z.B. eine Funkverbindung). Jede der beiden Leitungen 11, 31 weist eine Bandbreitenbegrenzung auf, die nur einen begrenzten Abschnitt von x Prozent an Sensordaten an die Steuerungseinrichtung 30 und nur y Prozent der Sensordaten zur Verarbeitungsvorrichtung 200 übertragen kann, wobei x und y im Allgemeinen meist viel kleiner als 100 Prozent sind.

Unter Sensordaten werden in diesem Zusammenhang entweder Sensor-Rohdaten oder (was normalerweise der Fall ist) verarbeitete Messungsdaten (z.B. durch Filterung, Merkmalsextraktion, Modellbildung, usw.) verstanden. Nachdem die Steuerungseinrichtung 30 zusätzlichen Zugriff auf andere Informationsquellen besitzt, z.B. mittels einer dritten Leitung 21 auf eine Verortungseinrichtung 20, gespeicherte Karten, usw., und nachdem, wie bereits erwähnt, eine optimale Übertragungsstrategie durch den Umfang der verfügbaren Information positiv beeinflusst wird, können für diese Situation zwei prinzipiell unterschiedliche Anwendungsfälle unterschieden werden:
Anwendungsfall 1 (erfindungsgemäß):
   Die Sensoreinrichtung 10 wird bereits mit entsprechend vorkonfigurierter Software ausgeliefert und kann nicht umkonfiguriert werden.
Anwendungsfall 2 (nicht unter die Erfindung fallend):
   Die Sensoreinrichtung 10 kann von der Steuerungseinrichtung 30 gesteuert oder konfiguriert werden, wobei auf diese Weise beeinflusst werden kann, welche Sensordaten die Sensoreinrichtung 10 an die Steuerungseinrichtung 30 überträgt.

Beim ersten Anwendungsfall, der für übliche Fahrzeuge der Normalfall ist, wird die optimale Strategie darin bestehen, eine Datenübertragungsstrategie betreffend Sensordaten fest einzustellen, wohingegen beim zweiten Anwendungsfall eine Datenübertragungsstrategie betreffend Sensordaten an eine konkret bestehende Situation angepasst wird. Mit beiden Anwendungsfällen kann eine optimiert digitale Karte unter Ausnutzung einer systembedingten Bandbreitenbegrenzung realisiert werden.

Auf diese Weise kann mit Hilfe eines Datenbegrenzungskriteriums z.B. eine feste oder eine randomisierte Übertragung der Sensordaten über die Leitungen 11, 31 erfolgen.

Vorgesehen kann auch sein, dass die Steuerungseinrichtung 30 mit der Sensoreinrichtung 10 über eine Rückkopplungsleitung 33 kommunizieren kann, wobei die Steuerungseinrichtung 30 der Sensoreinrichtung 10 über die Rückkopplungsleitung 33 mitteilen kann, welche Sensordaten sie gerne hätte. Zum Beispiel können auf diese Weise in einem definierten Zeitabschnitt Sensordaten in Form von Umfelddaten SD, die von einer definierten Fahrzeugseite erfasst wurden, übermittelt werden.

Ferner kann im Sinne eines Anfrage/Antwort-Prinzips von der Verarbeitungsvorrichtung 200 entschieden werden, ob vollständige Umfelddaten SD an die Verarbeitungsvorrichtung 200 übertragen werden sollen. Dabei können z.B. Umfelddaten SD eines definierten Bereichs (z.B. ein Georechteck-Bereich) angefordert werden, was zum Beispiel im Header der derart örtlich zugeordneten Umfelddaten SD' spezifiziert sein kann. Zu diesem Zweck kann von der Verarbeitungsvorrichtung 200 eine Rückkopplungsleitung 32 zur Steuerungseinrichtung 30 vorgesehen sein.

Man erkennt, dass zum Zwecke des Realisierens des Datenbegrenzungskriteriums die Sensoreinrichtung 10 eine erste Begrenzungseinrichtung 12 aufweist, mittels derer entschieden wird, welche Umfelddaten SD vermutlich die relevantesten sind, die dann an die Steuerungseinrichtung 30 übertragen werden. Auf diese Weise findet eine Priorisierung von wichtigen Umfelddaten SD bereits auf der Sensoreinrichtung 10 statt.

Optional oder zusätzlich kann auch eine zweite Begrenzungseinrichtung 34 auf der Steuerungseinrichtung 30 ausgebildet sein, die ein Datenbegrenzungskriterium auf der Steuerungseinrichtung 30 implementiert.

Zum Beispiel kann unter Verwendung der Verortungseinrichtung 20 (Anwendungsfall 2) das Fahrzeug feststellen, ob die Straße, auf der es entlangfährt, jene ist, auf welcher es zuvor entlang gefahren ist. Angenommen, dass es in der ersten Fahrt einen Teil der Umfelddaten SD gesendet hat, welche spezifisch für einen Teil der Umgebung sind. Unter Bereitstellung dieser Information kann ein optimales Verhalten (zum Beispiel zur optimalen Abdeckung der digitalen Karte) darin bestehen, dass während der zweiten Fahrt ein anderer Teil der Umfelddaten SD, der bei der ersten Fahrt nicht übermittelt wurde, nunmehr übermittelt wird. Im Anwendungsfall 1 kann eine derartige Adaption in Richtung einer besseren Abdeckung nicht realisiert werden.

Verbesserte Strategien betreffend eine begrenzte Datenübertragung können daraus resultieren, dass das Fahrzeug mit anderen Fahrzeugen im Umfeld kommunizieren kann. Die genannten Strategien können zum Beispiel das Verhalten der Datenübertragung adaptieren, um den Nachteil von gegenseitiger Abdeckung zu minimieren, eine Genauigkeit in bestimmten Abschnitten der Karte zu verbessern, die Abdeckung der Karte zu verbessern, usw., wobei alle genannten Aktionen unter der Voraussetzung von begrenzter Bandbreite durchgeführt werden.

Was für die Steuerungs- oder Rekonfigurationsmöglichkeiten zwischen der Steuerungseinrichtung 20 und der Sensoreinrichtung 10 gilt, kann auch für die Verbindung zwischen der Verarbeitungsvorrichtung 200 und der Steuerungseinrichtung 30 angewendet werden. Dabei macht es z.B. einen Unterschied, ob die Verarbeitungsvorrichtung 200 die Fähigkeit besitzt, um von der Sensoreinrichtung 20 über die Rückkopplungsleitung 32 vom Fahrzeug Umfelddaten SD in Form einer spezifischen Art von Information anzufordern oder sich auf einige Abschnitte der Umgebung usw. zu fokussieren, basierend auf dem gegenwärtigen Status der auf der Verarbeitungsvorrichtung 200 hinterlegten digitalen Karte.

Ein weiterer Aspekt betrifft eine Dimensionalität des Raums, aus welchem die Umfelddaten SD stammen. Zum Beispiel kann eine Flotte von Fahrzeugen mit Radarsensoren ausgestattet sein, wobei jeder Radarsensor während der Fahrt des Fahrzeugs sogenannte punktuelle Cloud-Messungen der Umgebung durchführt. Jeder Punkt der punktuellen Cloud-Messung enthält Informationen, die einen Raum in verschiedene Dimensionen aufspannt (z.B. x-Richtung, y-Richtung, z-Richtung, RCS, usw....), und enthält für einige dieser Dimensionen Varianz/Kovarianz-Werte. Zusätzlich können auch wenigstens einer der folgenden Parameter: Aufzeichnungszeit, Fahrzeugtyp, Sensor-Montageposition, Sensor-Softwareversion, usw. andere Dimensionen des Datenraums begründen.

Die Strategie, die die Genauigkeit, und/oder die Abdeckung, und/oder die Neuheit der digitalen Karte optimiert, sollte die genannte Raum-Dimensionalität in Betracht ziehen. Dies kann sich vorteilhaft in verringerten Kosten der übertragenen Umfelddaten SD widerspiegeln.

Zum Beispiel kann einer Kostenfunktion eine höhere Gewichtung beigemessen werden, welche auf eine räumliche Genauigkeit bezogen ist, gegenüber einer Kostenfunktion, die auf die RCS-Genauigkeit bezogen ist, usw., was in unterschiedlichen Datenübertragungsstrategien resultiert. Die optimale Datenübertragungsstrategie kann zum Beispiel für jeden Teil der Fahrzeugflotte auf einige Richtungen des Raums fokussiert sein.

Andere Gewichtsfunktionen können auf jede Dimension des Raums mit einem Grad an gewünschter Auflösung pro Dimension definiert und entsprechend abgeändert werden. Zum Beispiel kann eine hohe Gewichtung auf eine räumliche Genauigkeit der Umfelddaten SD gelegt werden, bis die digitale Karte einen definierten Genauigkeitsgrad erreicht hat (z.B. in der Größenordnung von ca. 10 cm), danach kann die Gewichtung der räumlichen Genauigkeit gesenkt werden und die Strategie der beschränkten Sensordaten auf andere Dimensionen gerichtet werden.

Ein weiteres Beispiel ist die Aufnahme- bzw. Erfassungszeit der Umfelddaten SD, wobei unterschiedliche Auflösungen von Sensordaten, die am Tag oder in der Nacht aufgenommen wurden, im Fokus des Interesses stehen könnten, wobei dabei die genaue Uhrzeit eher von untergeordneter Bedeutung ist. Dies kann ebenfalls entscheidend einen Umfang an übertragenen Umfelddaten SD reduzieren.

Im Ergebnis kann mit dem vorgeschlagenen Verfahren vorteilhaft eine Datenübertragungsstrategie definiert werden, die es erlaubt, ein im Stand der Technik bekanntes Modell auszubilden, beginnend von hohen zu niedrigen Stufen. Auf diese Weise kann in Abhängigkeit von der Anzahl an Fahrzeugen, die in einer definierten Region unterwegs sind, die Genauigkeit und Aktualität der Kartendaten und damit auch der Lokalisierung verbessert werden.

Obwohl vorgehend das Verfahren im Zusammenhang mit der Erstellung einer digitalen Karte erläutert wurde, ist das Verfahren nicht darauf beschränkt. Vorteilhaft kann die Erfindung nicht nur zum Ausbilden einer optimierten digitalen Karte, sondern auch zur Erreichung eines optimalen Ziels verwendet werden. Dies kann z.B. eine optimierte Lokalisierung, zum Beispiel in Form von Genauigkeit, Verfügbarkeit, Robustheit, Sicherheit, usw. oder in einer allgemeinen optimierten Funktionalität (z.B. Lokalisierung, Planung, Perzeption, oder andere Funktionen, die das Fahrzeug unter Verwendung der zu erstellenden Karte durchführt, bestehen.

Fig. 2 zeigt einen prinzipiellen Ablauf eines vorgeschlagenen Verfahrens zum Verarbeiten von Sensordaten, das die Anwendungsfälle 1 und 2 betrifft.

In einem Schritt 300 wird ein Bereitstellen von Umfelddaten SD eines Fahrzeugs mittels einer Sensoreinrichtung 10 durchgeführt.

In einem Schritt 310 wird ein Zuordnen der Umfelddaten SD zu entsprechenden Verortungsdaten OD durchgeführt.

In einem Schritt 320 wird ein Übermitteln der örtlich zugeordneten Umfelddaten SD' an eine Verarbeitungsvorrichtung 200 durchgeführt, wobei die Übertragung der Umfelddaten SD zwischen der Sensoreinrichtung 10 und einer Steuerungseinrichtung 30 und/oder die Übertragung der örtlich zugeordneten Umfelddaten SD' zwischen der Steuerungseinrichtung 30 und der Verarbeitungsvorrichtung 200 gemäß einem definierten Datenbegrenzungskriterium durchgeführt wird.

Vorteilhaft lässt sich das erfindungsgemäße Verfahren als eine Software implementieren, die beispielsweise auf der elektronischen Steuerungseinrichtung 30 in Form eines Steuergeräts im Fahrzeug oder cloud-basiert auf einer Servereinrichtung abläuft. Eine einfache Adaptierbarkeit des Verfahrens ist auf diese Weise unterstützt.

## Patentansprüche

1. Verfahren zum Verarbeiten von Sensordaten, mit den Schritten:
- Bereitstellen von Umfelddaten (SD) eines Fahrzeugs;
- Zuordnen der Umfelddaten (SD) zu entsprechenden Verortungsdaten (OD); und
- Übermitteln der örtlich zugeordneten Umfelddaten (SD') an eine Verarbeitungsvorrichtung (200);
**dadurch gekennzeichnet, dass**
- die Übertragung der Umfelddaten (SD) zwischen einer Sensoreinrichtung (10) und einer Steuerungseinrichtung (30) gemäß einem definierten Datenbegrenzungskriterium durchgeführt wird, das durch die eine entsprechend vorkonfigurierte Software aufweisende und nicht umkonfigurierbare Sensoreinrichtung (10) definiert wird.

2. Verfahren nach Anspruch 1, wobei mit dem Datenbegrenzungskriterium die Umfelddaten (SD) selektiert werden.

3. Verfahren nach Anspruch 2, wobei zufällig ausgewählte Umfelddaten (SD") übermittelt werden.

4. Verfahren nach einem der vorhergehenden Ansprüche, wobei beim Ermitteln der Umfelddaten (SD) eine Priorisierung der Erfassungstätigkeit der Sensoreinrichtung (10) in definierte Richtungen durchgeführt wird.

5. Verfahren nach einem der vorhergehenden Ansprüche, wobei beim Bereitstellen der Umfelddaten (SD) ein örtlich und/oder zeitlich definiert dichtes Erfassen von Messpunkten durchgeführt wird.

6. Verfahren nach einem der vorhergehenden Ansprüche, wobei die Umfelddaten (SD) für die Erstellung einer digitalen Karte verwendet werden.

7. Vorrichtung (100) zum Übertragen von Sensordaten, aufweisend:
- eine Sensoreinrichtung (10) zum Bereitstellen von Umfelddaten (SD) eines Fahrzeugs;
- eine Verortungseinrichtung (20);
- eine Steuerungseinrichtung (30) zum Zuordnen der Umfelddaten (SD) zu entsprechenden Verortungsdaten (OD);
- eine erste Übermittlungseinrichtung (11) zum Übermitteln der Umfelddaten (SD) von der Sensoreinrichtung an die Steuerungseinrichtung (30) und eine zweite Übermittlungseinrichtung (31) zum Übermitteln der örtlich zugeordneten Umfelddaten (SD') an eine außerhalb der Vorrichtung (100) angeordnete Verarbeitungsvorrichtung (200);
**dadurch gekennzeichnet, dass**
- die Übertragung der Umfelddaten (SD) zwischen der Sensoreinrichtung (10) und der Steuerungseinrichtung (30) gemäß einem definierten Datenbegrenzungskriterium durchgeführt wird, das durch die eine entsprechend vorkonfigurierte Software aufweisende und nicht umkonfigurierbare Sensoreinrichtung (10) definiert wird.

## Claims

1. Method for processing sensor data, with the steps of:
- providing surroundings data (SD) relating to a vehicle;
- assigning the surroundings data (SD) to corresponding locating data (OD); and
- transmitting the locally assigned surroundings data (SD') to a processing apparatus (200);
**characterized in that**
- the surroundings data (SD) are transferred between a sensor device (10) and a control device (30) according to a defined data limitation criterion which is defined by the sensor device (10) that has correspondingly preconfigured software and is not reconfigurable.

2. Method according to Claim 1, wherein the surroundings data (SD) are selected with the data limitation criterion.

3. Method according to Claim 2, wherein randomly selected surroundings data (SD") are transmitted.

4. Method according to one of the preceding claims, wherein the detection activity of the sensor device (10) in defined directions is prioritized when determining the surroundings data (SD).

5. Method according to one of the preceding claims, wherein locally and/or temporally defined dense detection of measuring points is carried out when providing the surroundings data (SD).

6. Method according to one of the preceding claims, wherein the surroundings data (SD) are used to create a digital map.

7. Apparatus (100) for transferring sensor data, comprising:
- a sensor device (10) for providing surroundings data (SD) relating to a vehicle;
- a locating device (20);
- a control device (30) for assigning the surroundings data (SD) to corresponding locating data (OD);
- a first transmission device (11) for transmitting the surroundings data (SD) from the sensor device to the control device (30) and a second transmission device (31) for transmitting the locally assigned surroundings data (SD') to a processing apparatus (200) arranged outside the apparatus (100);
**characterized in that**
- the surroundings data (SD) are transferred between the sensor device (10) and the control device (30) according to a defined data limitation criterion which is defined by the sensor device (10) that has correspondingly preconfigured software and is not reconfigurable.

## Revendications

1. Procédé de traitement de données de capteur, comprenant les étapes :
- fourniture de données d'environnement (SD) d'un véhicule ;
- association des données d'environnement (SD) à des données de localisation (OD) correspondantes ; et
- communication des données d'environnement associées localement (SD') à un arrangement de traitement (200) ;
**caractérisé en ce que**
- la transmission des données d'environnement (SD) entre un dispositif de détection (10) et un dispositif de commande (30) est effectuée conformément à un critère de limitation de données défini, lequel est défini par le dispositif de détection (10) qui est non reconfigurable et qui possède un logiciel préconfiguré en conséquence.

2. Procédé selon la revendication 1, les données d'environnement (SD) étant sélectionnées avec le critère de limitation de données.

3. Procédé selon la revendication 2, des données d'environnement sélectionnées de manière aléatoire (SD") étant communiquées.

4. Procédé selon l'une des revendications précédentes, une priorisation de l'activité d'acquisition du dispositif de détection (10) dans des directions définies étant effectuée lors de la détermination des données d'environnement (SD).

5. Procédé selon l'une des revendications précédentes, une acquisition dense définie localement et/ou temporellement de points de mesure étant effectuée lors de la fourniture des données d'environnement (SD).

6. Procédé selon l'une des revendications précédentes, les données d'environnement (SD) étant utilisées pour la création d'une carte numérique.

7. Arrangement (100) de transmission de données de capteur, comprenant :
- un dispositif de détection (10) destiné à fournir des données d'environnement (SD) d'un véhicule ;
- un dispositif de localisation (20) ;
- un dispositif de commande (30) destiné à associer les données d'environnement (SD) à des données de localisation (OD) correspondantes ;
- un premier dispositif de communication (11) destiné à communiquer les données d'environnement (SD) du dispositif de détection au dispositif de commande (30) et un deuxième dispositif de communication (31) destiné à communiquer les données d'environnement associées localement (SD') à un arrangement de traitement (200) disposé à l'extérieur de l'arrangement (100) ;
**caractérisé en ce que**
- la transmission des données d'environnement (SD) entre le dispositif de détection (10) et le dispositif de commande (30) est effectuée conformément à un critère de limitation de données défini, lequel est défini par le dispositif de détection (10) qui est non reconfigurable et qui possède un logiciel préconfiguré en conséquence.
